# FASCICULE DE BREVET EUROPEEN

(11) **EP 2 131 286 B1**
(45) Date de publication et mention de la délivrance du brevet: **16.11.2011**
(21) Numéro de dépôt: 09305476.5
(22) Date de dépôt: 25.05.2009
(51) Int. Cl.: G06F 13/40, H04B 3/54

(54) **Procédé de limitation du courant injecté sur une patte de microcontrôleur**
Verfahren zur Begrenzung des eingespeisten Stroms in eine Leiste eines Mikrocontrollers
Method for limiting the current injected on a micro-controller tab

(30) Priorité: 05.06.2008 FR 0853729
(43) Date de publication de la demande: 09.12.2009
(73) Titulaire: SEB S.A., 69130 Ecully (FR)
(72) Inventeur: Beule, Mickael, 14400, Crouay (FR); Leterrier, Thomas, 50000, Saint-Lo (FR)
(74) Mandataire: Palix, Stéphane

(56) Documents cités:
- WO-A-2006/073138

## Description

La présente invention a trait au domaine de la limitation de courant injecté dans un microcontrôleur.

Classiquement, un microcontrôleur est apte à recevoir sur au moins une des ses pattes un courant alternatif dont les passages par zéro lui servent à se synchroniser. Dans de nombreuses applications, ce courant alternatif présente une amplitude de pic importante. On pourra par exemple citer le cas d'une synchronisation réalisée à l'aide du courant délivré par un réseau électrique de distribution en 220 volts et 50 Hertz.

Or, les spécifications de fonctionnement d'un microcontrôleur impose que le courant injecté sur la patte de synchronisation soit limité en amplitude pour ne pas détériorer les caractéristiques électriques, endommager, voire détruire le microcontrôleur. A cet effet, la patte de synchronisation est associée à un circuit électrique de mise en forme du courant alternatif afin de satisfaire auxdites spécifications.

Toutefois, les circuits de mise en forme de l'état de la technique sont complexes et utilisent des composants induisant un coup non négligeable et ont une sensibilité accrue en compatibilité électromagnétique (« CEM »)

En outre, ces circuits de mise en forme sont eux-mêmes soumis à des spécifications de fonctionnement afin d'éviter leur endommagement. De fait, les circuits de mise en forme sont usuellement spécifiques à un type d'application.

Le but de l'invention est de proposer une limitation efficace du courant injecté sur une patte d'un microcontrôleur qui utilise très peu de composants tout en permettant une utilisation pour une gamme très large de courants injectés.

A cet effet, l'invention a pour objet un Procédé de limitation du courant injecté sur une patte de microcontrôleur, destinée à recevoir un courant alternatif pour sa synchronisation en fonction de passages par zéros dudit courant, ladite patte étant associée à un circuit d'écrêtage à base de diodes dans lequel le courant est envoyé dans un mode d'entrée de ladite patte, et à un circuit à base de transistors MOS dans lequel le courant est envoyé dans un mode de sortie de ladite patte.

Selon l'invention, le procédé comporte l'activation du mode d'entrée de ladite patte à l'approche d'un passage par zéro de synchronisation et l'activation du mode de sortie une fois ledit passage par zéro de synchronisation reçu sur la patte.

En d'autres termes, l'invention utilise des composants classiquement présents dans un microcontrôleur et leur mode de fonctionnement pour limiter le courant injecté sur la patte.

Cette limitation est réalisée par une activation appropriée du circuit d'écrêtage pendant des intervalles de temps juste nécessaires pour recevoir les passages par zéro utilisés pour la synchronisation. Pendant ces intervalles de temps, l'amplitude du courant est faible et ne nuit donc pas aux composants du circuit d'écrêtage. Une fois un passage par zéro de synchronisation reçu, le circuit d'écrêtage est désactivé, aucun courant ne circulant dans celui-ci. Le courant injecté sur la patte est alors traité par le circuit à base de transistors MOS dont on sait qu'ils peuvent recevoir un courant un millier de fois supérieur à un courant endommageant une diode.

De fait, un microcontrôleur piloté selon le procédé de l'invention est tolérant aux variations de pic d'amplitude du courant utilisé pour sa synchronisation.

L'invention sera mieux comprise à la lecture de la description qui va suivre, donnée uniquement à titre d'exemple, et faite avec les dessins annexés, dans lesquels :
- la figure 1 est une vue schématique des circuits de mise en forme associés à une patte de microcontrôleur ;
- la figure 2 est un chronogramme illustrant les périodes d'activation et de désactivation des circuits d'écrêtage et de génération de bit entrant dans la constitution du circuit de mise en forme de la figure 1 ; et
- les figures 3 à 6 sont des courbes illustrant un courant circulant dans les diodes du circuit d'écrêtage sans et avec la limitation de courant de l'invention.

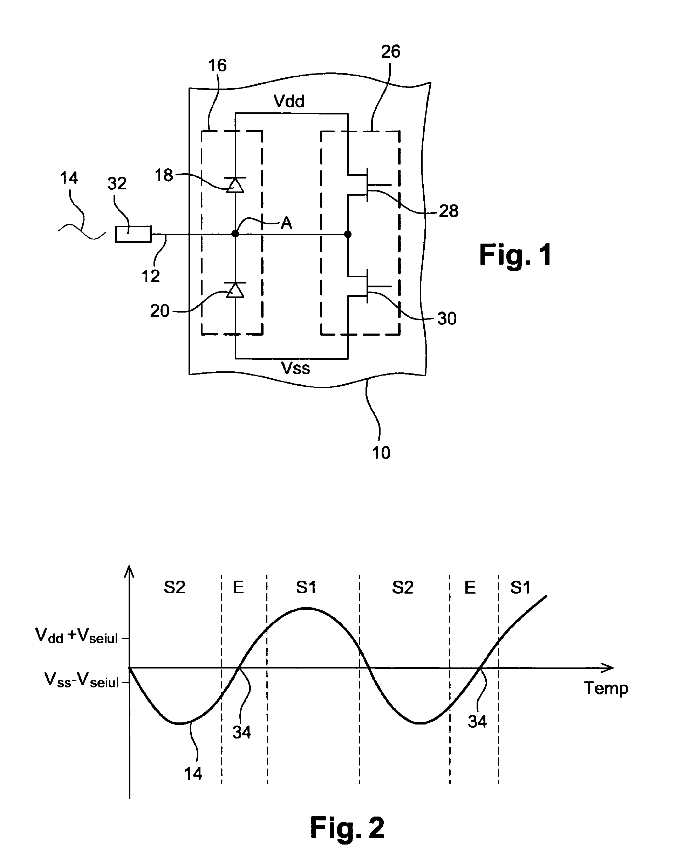

Sur la figure 1, il est illustré un microcontrôleur 10 équipé d'une patte 12 apte à recevoir à des fins de synchronisation un courant alternatif 14 du réseau de distribution d'électricité, par exemple un courant alternatif à 220 Volts et 50 Hertz.

Le microcontrôleur 10 comprend un circuit d'écrêtage 16 formé de deux diodes identiques 18, 20 connectées en série entre une tension Vdd et Vss, la patte 12 étant connectée au noeud A de la connexion série. Lorsque les diodes sont polarisées, le circuit 16 écrête ainsi le courant injecté sur la patte 12 à Vdd+Vseuil lorsque l'amplitude du courant injecté est supérieure à cette valeur, et à Vss-Vseuil lorsque l'amplitude du courant injecté est inférieure à cette valeur, la tension Vseuil étant la tension de seuil des diodes 18, 20.

Le microcontrôleur 10 comprend également un circuit 26 formé de deux transistors MOS identiques 28, 30 connectés en série, le drain de l'un étant connecté à la source de l'autre par le noeud A, entre la tension Vdd et Vss. Le circuit 26 a pour effet de créer des états hauts ou bas sur la patte 12 en fonction de l'état passant ou bloquant des transistors 28, 30, comme cela est connu en soi.

La patte 12 peut usuellement être configurée selon deux modes. Dans le premier mode, désigné « mode d'entrée », les diodes 18, 20 sont polarisées et drainent le courant entrant dans la patte 12. Ce mode est usuellement prévu pour que le microcontrôleur 10 identifie l'état du signal entrant sur sa patte 12 pour des raisons de synchronisation.

Dans le second mode, désigné « mode de sortie », le microcontrôleur génère sur la patte 12 des niveaux hauts et bas à l'aide du circuit 26 à des fins de communication. Les niveaux haut et bas ainsi générés ne dépassant pas les tensions Vdd et Vss, les diodes 18, 20 ne sont pas polarisées.

Enfin, une résistance 32 de quelques kilo ohms est connectée à la patte 12 de manière à apporter une première limitation du courant injecté dans celle-ci, comme cela sera expliqué plus en détail par la suite.

Usuellement, lorsque la patte 12 est utilisée uniquement pour recevoir un courant à des fins de synchronisation établies sur la base des passages par zéro de celui-ci, la patte 12 reste continûment en mode entrée. Il est donc nécessaire que les diodes 18, 20 soient dimensionnées pour accepter les amplitudes maximales de ce courant sans être endommagées ou détruites. On notera à cet égard que prévoir une grande valeur de résistance pour la résistance 32 ne suffit pas à garantir une limitation efficace du courant injecté sur la patte 12 en raison des problèmes de compatibilité électromagnétique. En effet, plus la valeur de la résistance 32 est élevée, plus la sensibilité en CEM est importante.

Selon l'invention, un basculement approprié entre les modes d'entrée et de sortie lorsque la patte 12 est utilisée pour recevoir du courant permet une limitation efficace du courant sur celle-ci.

Le procédé de basculement entre le mode d'entrée et le mode de sortie est décrit en relation avec la figure 2 qui illustre le courant alternatif 14 du réseau de distribution et les différents états de fonctionnement du microcontrôleur en fonction de la valeur du courant 14. Dans l'exemple de la figure 2, les passages par zéro 34 depuis une alternance négative vers une alternance positive du courant 14, ci-après « passage par zéro de synchronisation », sont utilisés comme top de synchronisation par le microcontrôleur 10.

A l'approche d'un passage par zéro de synchronisation 34 du courant 14, les diodes 18 et 20 sont polarisées car le microcontrôleur 10 fonctionne dans le mode d'entrée « E ». Le courant injecté dans la patte 12 transite alors par la diode 20 quand le courant est négatif puis dans la diode 18 quand le courant est positif.

Une fois le passage par zéro de synchronisation reçu par le microcontrôleur 10, les diodes 18 et 20 ne sont plus polarisées, le transistor 28 est dans son état bloqué et le transistor 30 est dans son état passant. Le courant injecté dans la patte 12 transite alors par le transistor 30. Le microcontrôleur 10 fonctionne ainsi dans le mode de sortie, ici caractérisé par le transistor 28 bloqué et le transistor 30 passant. Ce sous-état du mode de sortie est noté « S1 » dans la figure 2.

Lorsque le courant alternatif passe en négatif, le transistor 28 est alors basculé dans son état passant et le transistor 30 est basculé dans son état bloqué. Le courant injecté dans la patte 12 transite alors par le transistor 28. Le microcontrôleur 10 fonctionne toujours dans le mode de sortie mais avec un sous-état dans lequel le transistor 28 est passant et transistor 30 est bloquant. Ce sous-état du mode de sortie est noté « S2 » dans la figure 2.

Les phases de basculement entre les différents modes de fonctionnement venant d'être décrits se répètent alors pour les alternances suivantes du courant 14.

Ainsi, le courant injecté dans la patte 12 circule dans les diodes 18 et 20 uniquement lorsque la valeur de ce courant est faible, sans que cela ait une incidence sur la récupération des instants des passages par zéro de synchronisation.

Les diodes 18, 20 sont connectées de façon permanente à la patte 12. La limitation de courant selon l'invention consiste donc à dériver le courant sur la patte 12 vers les transistors MOS internes au microcontrôleur lorsque le courant présente de grandes valeurs.

On notera que les instants de basculement entre les différents modes sont déterminés par la connaissance a priori de la fréquence du courant alternatif 14, comme cela est connu en soi.

Par ailleurs, les intervalles pendant lesquels le microcontrôleur 10 fonctionne dans le mode d'entrée peuvent être ajustés en fonction de la valeur de la résistance 32. Par exemple, plus la résistance 32 est importante, plus ces intervalles pourront être long si souhaité afin de s'assurer de la réception des passages par zéro de synchronisation.

Bien entendu, d'autres modes de réalisation sont possibles.

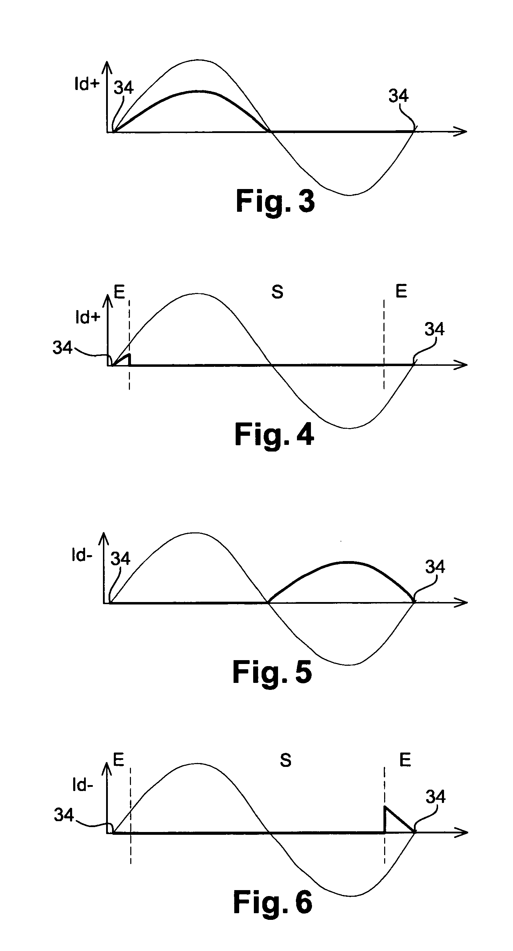

La figure 3 illustre en gras le courant circulant par exemple dans la diode 18 en absence de limitation selon l'invention alors que la figure 4 illustre ledit courant avec une limitation selon l'invention. Comme il est possible de le constater, le courant circulant dans la diode 20 est sensiblement limité.

De même, les figures 5 et 6 illustre en gras la limitation de courant obtenue dans la diode 20 grâce à l'invention (figure 6) en comparaison d'absence de limitation (figure 5).

## Revendications

1. Procédé de limitation du courant injecté sur une patte (12) de microcontrôleur (10), destinée à recevoir un courant alternatif (14) pour sa synchronisation en fonction de passages par zéros (34) dudit courant, ladite patte (12) étant associée à un circuit d'écrêtage (16) à base de diodes (18, 20) dans lequel le courant (14) est envoyé dans un mode d'entrée de ladite patte (12), et à un circuit (26) à base de transistors MOS (28, 30) dans lequel le courant (14) est envoyé dans un mode de sortie de ladite patte (12), **caractérisé en ce que** le procédé comporte l'activation du mode d'entrée de ladite patte (12) à l'approche d'un passage par zéro de synchronisation et l'activation du mode de sortie une fois ledit passage par zéro de synchronisation reçu sur la patte (12).

2. Procédé selon la revendication 1, **caractérisé en ce qu'**il comporte une limitation du courant en entrée du circuit d'écrêtage, notamment au moyen d'une résistance.

## Claims

1. Method for limiting the current injected on a pin (12) of a microcontroller (10) designed to receive an alternating current (14) in order to synchronize it as a function of the zero crossings (34) of said current, said pin (12) being associated with a diode (18, 20) based clipper circuit (16) in which the current (14) is sent in an input mode of said pin (12) and with a MOS transistor (28, 30) based circuit in which the current (14) is sent in an output mode of said pin (12), **characterized in that** the method involves enabling the input mode of said pin (12) as the synchronization zero crossing is approached and enabling the output mode once said synchronization zero crossing has been received on pin (12).

2. Method as claimed in claim 1, **characterized in that** it includes current limiting on the input of the clipper circuit, especially by means of a resistance.

## Patentansprüche

1. Verfahren zur Begrenzung eines Stroms, der über einen Anschluss (12) eines Mikrosteuerbausteins (10) injiziert wird, welcher Anschluss dazu bestimmt ist, einen Wechselstrom (14) für seine Synchronisation in Abhängigkeit von Nulldurchgängen (34) des Stroms aufzunehmen, wobei der Anschluss (12) mit einer Begrenzungsschaltung (16) auf Basis von Dioden (18, 29), in die der Strom (14) in einem Eingangsmodus des Anschlusses (12) eingeleitet wird, und einer Schaltung (26) auf Basis von MOS-Transistoren (28, 30) verbunden ist, in die der Strom (14) in einem Ausgangsmodus des Anschlusses (12) eingeleitet wird, **dadurch gekennzeichnet, dass** das Verfahren die Aktivierung des Eingangsmodus des Anschlusses (12) bei Annäherung an einen Synchronisationsnulldurchgang und die Aktivierung des Ausgangsmodus umfasst, sobald der Synchronisationsnulldurchgang über den Anschluss (12) eingeht.

2. Verfahren nach Anspruch 1, **dadurch gekennzeichnet, dass** es eine Begrenzung des Stroms am Eingang der Begrenzungsschaltung, insbesondere mittels eines Widerstands, umfasst.
